# EUROPEAN PATENT SPECIFICATION

(11) **EP 4 586 479 B1**
(45) Date of publication and mention of the grant of the patent: **28.10.2026**
(21) Application number: 25150879.2
(22) Date of filing: 09.01.2025
(51) Int. Cl.: H02M 1/00, H02M 1/08, H02M 1/32, H02M 7/5387

(54) **POWER CONVERTER AND METHOD FOR ADJUSTING DRIVE VOLTAGE OF POWER CONVERTER**
STROMWANDLER UND VERFAHREN ZUR EINSTELLUNG DER ANTRIEBSSPANNUNG EINES STROMWANDLERS
CONVERTISSEUR DE PUISSANCE ET PROCÉDÉ DE RÉGLAGE DE TENSION D'ATTAQUE DE CONVERTISSEUR DE PUISSANCE

(30) Priority: 12.01.2024 CN 202410048584
(43) Date of publication of application: 16.07.2025
(73) Proprietor: Huawei Digital Power Technologies Co., Ltd., Shenzhen, Guangdong 518043 (CN)
(72) Inventor: WU, Haolin, 518043 Shenzhen (CN); TANG, Junsong, 518043 Shenzhen (CN); QIAN, Bin, 518043 Shenzhen (CN); HOU, Bei, 518043 Shenzhen (CN); ZHOU, Ning, 518043 Shenzhen (CN)
(74) Representative: Isarpatent

(56) References cited:
- EP-A1- 3 937 361

## Description

### TECHNICAL FIELD

This technical description generally relates to the field of electronic components, and the invention in particular relates to a power converter and a method for adjusting a drive voltage of the power converter.

### BACKGROUND

With development of electronic components, power converters have been widely used in various systems. However, because a working condition of a power grid is extraordinarily complex, during application of a power converter, a voltage of an alternating current point of connection of the power converter is affected by the power grid at the point of connection, and a voltage fluctuation occurs. In particular, an upward fluctuation occurred on a voltage of an alternating current power grid may affect a voltage stress of a switching transistor in an inverter circuit of the power converter. When the upward fluctuation occurs on the voltage of the power grid, a voltage on a direct current side of the inverter circuit may be driven to increase. As a result, the voltage stress of the switching transistor is increased. In severe cases, the switching transistor may fail.

The technical problem addressed in EP 3937361 A1 is the excessive power loss in a switching power supply due to an excessively low gate-on voltage applied to a semiconductor switching device (such as a MOSFET or IGBT). The document proposes a control circuit (and associated method and device) that dynamically adjusts the gate-on voltage based on the actual, current operating conditions of the semiconductor switching device. A detection module senses the current operating condition(s) of the semiconductor switching device (such as temperature, current, and platform voltage), a determining module calculates the maximum allowable gate voltage for the device under those conditions, ensuring it does not exceed safe limits (to avoid gate or channel breakdown), and an output module generates a control signal for the driving power supply circuit, causing it to provide a gate-on voltage that is as high as safely possible under the current conditions (but not exceeding the calculated allowable voltage). By increasing the gate-on voltage when conditions permit, the switching device can transition more quickly between on and off states, reducing switching losses and improving efficiency, while still ensuring device reliability and avoiding breakdown.

### SUMMARY

The object of the present invention is to provide a power converter and a method for adjusting a drive voltage of the power converter, so that a voltage stress of a switching transistor in an inverter circuit can be reduced, and a risk that the switching transistor in the inverter circuit fails can be reduced. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, this invention provides a power converter, including an inverter circuit, an auxiliary power supply, a voltage regulation circuit, an analog control circuit, and a controller. The inverter circuit is configured to: convert a direct current from a photovoltaic module or an energy storage battery into an alternating current, and transmit the alternating current to a load. The auxiliary power supply includes a first output end, a second output end, and a switching transistor, a direct current output by the first output end is used to drive a switching transistor in the inverter circuit, and the second output end is configured to output a direct current to the analog control circuit. The voltage regulation circuit is configured to output a direct current to the analog control circuit. The analog control circuit is configured to change a duty cycle of the switching transistor in the auxiliary power supply, and a voltage of the direct current output by the first output end and a voltage of the direct current output by the second output end are positively correlated with the duty cycle of the switching transistor in the auxiliary power supply. When a voltage on a direct current side of the inverter circuit is greater than or equal to a first voltage threshold or a voltage on an alternating current side of the inverter circuit is greater than or equal to a second voltage threshold, the controller is configured to increase a voltage of the direct current output by the voltage regulation circuit. In addition, when a sum of the voltage of the direct current output by the voltage regulation circuit to the analog control circuit and the voltage of the direct current output by the second output end to the analog control circuit is greater than a third voltage threshold, the analog control circuit is configured to reduce the duty cycle of the switching transistor in the auxiliary power supply, to reduce the voltage of the direct current output by the first output end and the voltage of the direct current output by the second output end.

In this application, the sum of the voltages of the direct currents output by the voltage regulation circuit and the second output end to the analog control circuit is compared with the third voltage threshold preset by the analog control circuit, to dynamically change the duty cycle of the switching transistor in the auxiliary power supply. Further, when a circuit parameter in the auxiliary power supply (for example, a turn ratio of a transformer in the auxiliary power supply) is determined, voltage values of the direct currents output by the first output end and the second output end are adaptively adjusted. The voltage value of the direct current output by the first output end is changed, so that an overstress failure of the switching transistor in the inverter circuit caused by a voltage fluctuation occurred on the direct current side or the alternating current side of the inverter circuit can be avoided. Further, the circuit parameter in the auxiliary power supply has been determined. In this case, when the voltage value of the direct current output by the first output end changes, the voltage value of the direct current output by the second output end also changes synchronously. Therefore, the sum of the voltages of the direct currents output by the voltage regulation circuit and the second output end to the analog control circuit is changed, and closed-loop control is implemented. With the disposition, control logic is simplified, hardware replacement is avoided, and the overstress failure of the switching transistor in the inverter circuit is effectively avoided.

With reference to the first aspect, in a possible implementation, the voltage regulation circuit includes a switching transistor, a first resistor, a second resistor, a third resistor, and a capacitor. A collector of the switching transistor in the voltage regulation circuit is connected to the first resistor. An emitter of the switching transistor in the voltage regulation circuit is connected to the second resistor. A series connection point between the first resistor and the second resistor is connected to the third resistor, the capacitor is connected in parallel to two ends of the second resistor, and the series connection point between the first resistor and the second resistor is used to connect to the analog control circuit. A resistance value of the third resistor is greater than a resistance value of the first resistor, the resistance value of the third resistor is less than a resistance value of the second resistor, and the voltage of the direct current output by the voltage regulation circuit to the analog control circuit is negatively correlated with a duty cycle of the switching transistor in the voltage regulation circuit.

In this embodiment of this application, a specific circuit topology of the voltage regulation circuit is designed. In different states of the switching transistor, voltages of the capacitor are different. The resistance value of the third resistor is greater than the resistance value of the first resistor, and the resistance value of the third resistor is less than the resistance value of the second resistor. In this case, compared with a case in which the switching transistor in the voltage regulation circuit is in an off state, when the switching transistor in the voltage regulation circuit is in an on state, the voltage of the capacitor is relatively small. Therefore, the voltage of the direct current output by the voltage regulation circuit to the analog control circuit is negatively correlated with the duty cycle of the switching transistor in the voltage regulation circuit. In this way, when the controller reduces the duty cycle of the switching transistor in the voltage regulation circuit, the voltage of the direct current output by the voltage regulation circuit to the analog control circuit is increased.

With reference to the first aspect, in a possible implementation, the voltage regulation circuit further includes an operational amplifier and a fourth resistor. A non-inverting input end of the operational amplifier is connected to the series connection point between the first resistor and the second resistor, an inverting input end of the operational amplifier is connected to an output end of the operational amplifier, the output end of the operational amplifier is connected to one end of the fourth resistor, and the other end of the fourth resistor is configured to connect to the analog control circuit.

In this embodiment of this application, the operational amplifier and the fourth resistor are disposed in the voltage regulation circuit. The operational amplifier may isolate the fourth resistor from another component of the voltage regulation circuit. Therefore, a process of calculating the voltage of the direct current output by the voltage regulation circuit to the analog control circuit can be simplified, and calculation efficiency can be improved.

According to a second aspect according to the invention, the invention also provides another power converter, including an inverter circuit, an auxiliary power supply, a voltage regulation circuit, an analog control circuit, and a controller. The inverter circuit is configured to: convert a direct current from a photovoltaic module or an energy storage battery into an alternating current, and transmit the alternating current to a load. The auxiliary power supply includes a first output end, a second output end, and a switching transistor, a direct current output by the first output end is used to drive a switching transistor in the inverter circuit, and the second output end is configured to output a direct current to the analog control circuit. The voltage regulation circuit is configured to output a direct current to the analog control circuit. The analog control circuit is configured to change a duty cycle of the switching transistor in the auxiliary power supply, and a voltage of the direct current output by the first output end and a voltage of the direct current output by the second output end are positively correlated with the duty cycle of the switching transistor in the auxiliary power supply. When a voltage on a direct current side of the inverter circuit is less than or equal to a fourth voltage threshold or a voltage on an alternating current side of the inverter circuit is less than or equal to a fifth voltage threshold, the controller is configured to reduce a voltage of the direct current output by the voltage regulation circuit. In addition, when a sum of the voltage of the direct current output by the voltage regulation circuit to the analog control circuit and the voltage of the direct current output by the second output end to the analog control circuit is less than a third voltage threshold, the analog control circuit is configured to increase the duty cycle of the switching transistor in the auxiliary power supply, to increase the voltage of the direct current output by the first output end and the voltage of the direct current output by the second output end.

In this application, the sum of the voltages of the direct currents output by the voltage regulation circuit and the second output end to the analog control circuit is compared with the third voltage threshold preset by the analog control circuit, to dynamically change the duty cycle of the switching transistor in the auxiliary power supply. Further, when a circuit parameter in the auxiliary power supply (for example, a turn ratio of a transformer in the auxiliary power supply) is determined, voltage values of the direct currents output by the first output end and the second output end are adaptively adjusted. The voltage value of the direct current output by the first output end is changed, so that a loss of the switching transistor in the inverter circuit caused by a voltage fluctuation occurred on the direct current side or the alternating current side of the inverter circuit can be avoided. Further, the circuit parameter in the auxiliary power supply has been determined. In this case, when the voltage value of the direct current output by the first output end changes, the voltage value of the direct current output by the second output end also changes synchronously. Therefore, the sum of the voltages of the direct currents output by the voltage regulation circuit and the second output end to the analog control circuit is changed, and closed-loop control is implemented. With the disposition, control logic is simplified, hardware replacement is avoided, and the loss of the switching transistor in the inverter circuit is effectively avoided.

With reference to the second aspect, in a possible implementation, the voltage regulation circuit includes a switching transistor, a first resistor, a second resistor, a third resistor, and a capacitor. A collector of the switching transistor in the voltage regulation circuit is connected to the first resistor. An emitter of the switching transistor in the voltage regulation circuit is connected to the second resistor. A series connection point between the first resistor and the second resistor is connected to the third resistor, the capacitor is connected in parallel to two ends of the second resistor, and the series connection point between the first resistor and the second resistor is used to connect to the analog control circuit. A resistance value of the third resistor is greater than a resistance value of the first resistor, the resistance value of the third resistor is less than a resistance value of the second resistor, and the voltage of the direct current output by the voltage regulation circuit to the analog control circuit is negatively correlated with a duty cycle of the switching transistor in the voltage regulation circuit.

In this embodiment of this application, a specific circuit topology of the voltage regulation circuit is designed. In different states of the switching transistor, voltages of the capacitor are different. The resistance value of the third resistor is greater than the resistance value of the first resistor, and the resistance value of the third resistor is less than the resistance value of the second resistor. In this case, compared with a case in which the switching transistor in the voltage regulation circuit is in an off state, when the switching transistor in the voltage regulation circuit is in an on state, the voltage of the capacitor is relatively small. Therefore, the voltage of the direct current output by the voltage regulation circuit to the analog control circuit is negatively correlated with the duty cycle of the switching transistor in the voltage regulation circuit. In this way, when the controller increases the duty cycle of the switching transistor in the voltage regulation circuit, the voltage of the direct current output by the voltage regulation circuit to the analog control circuit is reduced.

With reference to the second aspect, in a possible implementation, the voltage regulation circuit further includes an operational amplifier and a fourth resistor. A non-inverting input end of the operational amplifier is connected to the series connection point between the first resistor and the second resistor, an inverting input end of the operational amplifier is connected to an output end of the operational amplifier, the output end of the operational amplifier is connected to one end of the fourth resistor, and the other end of the fourth resistor is configured to connect to the analog control circuit.

In this embodiment of this application, the operational amplifier and the fourth resistor are disposed in the voltage regulation circuit. The operational amplifier may isolate the fourth resistor from another component of the voltage regulation circuit. Therefore, a process of calculating the voltage of the direct current output by the voltage regulation circuit to the analog control circuit can be simplified, and calculation efficiency can be improved.

According to a third aspect according to the invention, the invention also provides a method for adjusting a drive voltage of a power converter. The method includes: When a voltage on a direct current side of an inverter circuit of the power converter is greater than or equal to a first voltage threshold or a voltage on an alternating current side of the inverter circuit is greater than or equal to a second voltage threshold, a voltage of a direct current output by a voltage regulation circuit of the power converter is increased. The voltage regulation circuit is connected to an analog control circuit of the power converter. In addition, when a sum of the voltage of the direct current output by the voltage regulation circuit to the analog control circuit and a voltage of a direct current output by a second output end of an auxiliary power supply of the power converter to the analog control circuit is greater than a third voltage threshold, a duty cycle of a switching transistor in the auxiliary power supply is reduced, to reduce a voltage of a direct current output by a first output end of the auxiliary power supply and the voltage of the direct current output by the second output end. The direct current output by the first output end is used to drive a switching transistor in the inverter circuit, and the voltage of the direct current output by the first output end and the voltage of the direct current output by the second output end are positively correlated with the duty cycle of the switching transistor in the auxiliary power supply.

For possible technical effects of the third aspect, refer to descriptions of the technical effects that can be achieved in the possible implementations of the first aspect. Details are not described herein again.

According to a fourth aspect according to the invention, the invention also provides the following method for adjusting a drive voltage of a power converter is provided. The method includes: When a voltage on a direct current side of an inverter circuit of the power converter is less than or equal to a fourth voltage threshold or a voltage on an alternating current side of the inverter circuit is less than or equal to a fifth voltage threshold, a voltage of a direct current output by a voltage regulation circuit of the power converter is reduced. The voltage regulation circuit is connected to an analog control circuit of the power converter. In addition, when a sum of the voltage of the direct current output by the voltage regulation circuit to the analog control circuit and a voltage of a direct current output by a second output end of an auxiliary power supply of the power converter to the analog control circuit is less than a third voltage threshold, a duty cycle of a switching transistor in the auxiliary power supply is increased, to increase a voltage of a direct current output by a first output end of the auxiliary power supply and the voltage of the direct current output by the second output end. The direct current output by the first output end is used to drive a switching transistor in the inverter circuit, and the voltage of the direct current output by the first output end and the voltage of the direct current output by the second output end are positively correlated with the duty cycle of the switching transistor in the auxiliary power supply.

For possible technical effects of the fourth aspect, refer to descriptions of the technical effects that can be achieved in the possible implementations of the second aspect. Details are not described herein again.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a diagram of a scenario applicable to this application;
FIG. 2 to FIG. 6 are schematics of a power converter according to an embodiment of this application; and
FIG. 7 and FIG. 8 are diagrams of a method for adjusting a drive voltage of a power converter according to an embodiment of this application.

### DESCRIPTION OF EMBODIMENTS

The following describes technical solutions of this application with reference to the accompanying drawings.

For ease of understanding, the following first briefly describes terms used in this application.

Voltage stress: Voltage stress is a ratio of a working voltage of a power switching transistor to a rated voltage, and is generally less than 0.9.

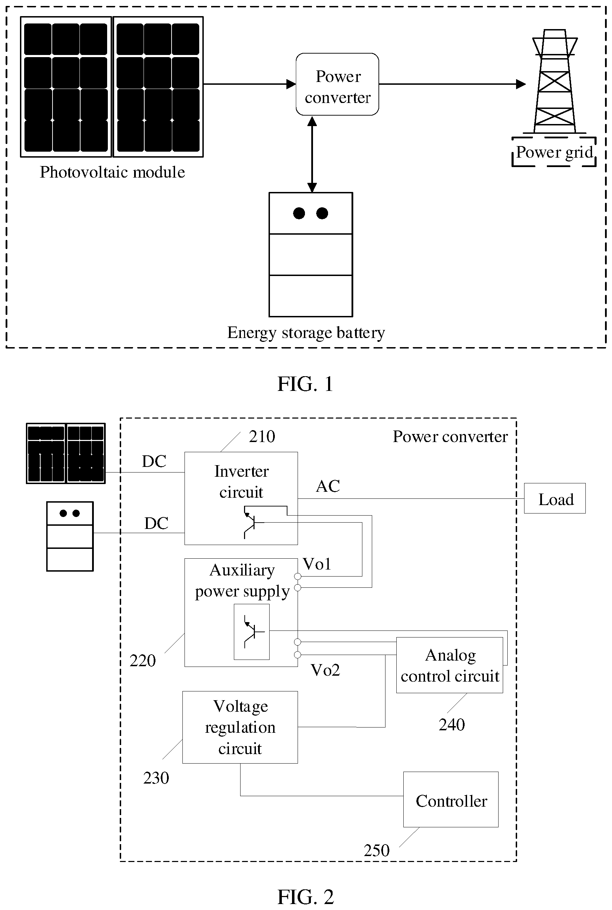

FIG. 1 is a diagram of a possible scenario applicable to this application. Refer to FIG. 1. A photovoltaic module converts solar energy into a direct current through photovoltaic effect, and a power converter converts the direct current into an alternating current and then sends the alternating current to a power grid. Alternatively, the power converter may convert a direct current from an energy storage system into an alternating current, and then send the alternating current to the power grid.

However, because a working condition of the power grid is extraordinarily complex, during application of the power converter, a voltage of an alternating current point of connection of the power converter is affected by the power grid at the point of connection, and a voltage fluctuation occurs. In particular, an upward fluctuation occurred on a voltage of an alternating current power grid may affect a voltage stress of a switching transistor in an inverter circuit of the power converter. When the upward fluctuation occurs on the voltage of the power grid, a voltage on a direct current side of the inverter circuit may be driven to increase. As a result, the voltage stress of the switching transistor is increased. In severe cases, the switching transistor may fail.

Based on this, this application provides a power converter. When the upward fluctuation occurs on the voltage of the power grid, the power converter may adaptively adjust a drive voltage used to drive the power switching transistor to be turned on or turned off, so that the voltage stress of the power switching transistor can be reduced.

FIG. 2 is a schematic of a power converter according to this application. The power converter includes an inverter circuit 210, an auxiliary power supply 220, a voltage regulation circuit 230, an analog control circuit 240, and a controller 250. The inverter circuit 210 is configured to: convert a direct current (DC) from a photovoltaic module or an energy storage battery into an alternating current (AC), and transmit the alternating current to a load. The auxiliary power supply 220 includes a first output end Vo1, a second output end Vo2, and a switching transistor, a direct current output by the first output end Vo1 is used to drive a switching transistor in the inverter circuit 210, and the second output end Vo2 is configured to output a direct current to the analog control circuit 240. The voltage regulation circuit 230 is configured to output a direct current to the analog control circuit 240. The analog control circuit 240 is configured to change a duty cycle of the switching transistor in the auxiliary power supply 220, and a voltage of the direct current output by the first output end Vo1 and a voltage of the direct current output by the second output end Vo2 are positively correlated with the duty cycle of the switching transistor in the auxiliary power supply 220.

The inverter circuit 210 in this embodiment of this application has a function of converting a direct current into an alternating current. For example, the inverter circuit 210 may convert the direct current from the photovoltaic module or the energy storage battery into the alternating current, and transmit the alternating current to the load, to supply power to the load. A specific topology of the inverter circuit is not limited in embodiments of this application, provided that any circuit topology in which the direct current can be converted into the alternating current is applicable to this application, for example, a voltage inverter circuit or a current inverter circuit.

In this embodiment of this application, a current input by an input end of the auxiliary power supply 220 is a direct current. A source of the direct current may be the direct current output by the photovoltaic module or the direct current stored in the energy storage battery. The auxiliary power supply 220 includes a plurality of output ends. The direct current output by the first output end Vo1 among the plurality of output ends is used to drive the switching transistor in the inverter circuit 210, so that the switching transistor in the inverter circuit 210 can work. The second output end Vo2 among the plurality of output ends is configured to output the direct current to the analog control circuit 240, so that the analog control circuit 240 can control the duty cycle of the switching transistor in the auxiliary power supply 220 based on the direct current and the direct current output by the voltage regulation circuit 230 to the analog control circuit 240.

It should be noted that, in this embodiment of this application, the second output end Vo2 is configured to output the direct current to the analog control circuit 240. For a specific voltage value of the direct current output by the second output end Vo2 to the analog control circuit, for different circuit topologies, voltage values of the direct current output by the second output end Vo2 to the analog control circuit are different.

In a possible circuit topology, the second output end Vo2 is directly connected to an input end of the analog control circuit 240. In this case, a voltage of the direct current output by the second output end Vo2 to the analog control circuit 240 is the voltage of the direct current output by the second output end Vo2. For example, if the voltage of the direct current output by the second output end Vo2 is 20 V, the voltage of the direct current output by the second output end Vo2 to the analog control circuit 240 is also 20 V.

In another possible circuit topology, the second output end Vo2 is connected to the input end of the analog control circuit 240 through a resistor. In this case, the voltage of the direct current output by the second output end Vo2 to the analog control circuit 240 is a voltage obtained through voltage division performed by the resistor. For example, if the voltage of the direct current output by the second output end Vo2 is 20 V, and a voltage obtained through voltage division performed on the voltage 20 V by the resistor is 2 V, the voltage of the direct current output by the second output end Vo2 to the analog control circuit 240 is 2 V. For ease of description, an example in which the second output end Vo2 is connected to the input end of the analog control circuit 240 through the resistor is used below.

Similarly, the voltage regulation circuit 230 is configured to output the direct current to the analog control circuit 240. A specific voltage value of the direct current output by the voltage regulation circuit 230 to the analog control circuit is similar to the voltage value of the direct current output by the second output end Vo2 to the analog control circuit. Details are not described again.

In this embodiment of this application, the voltage of the direct current output by the first output end and the voltage of the direct current output by the second output end are positively correlated with the duty cycle of the switching transistor in the auxiliary power supply 220. In other words, when the duty cycle of the switching transistor in the auxiliary power supply 220 is increased, both the voltage of the direct current output by the first output end and the voltage of the direct current output by the second output end are increased. When the duty cycle of the switching transistor in the auxiliary power supply 220 is reduced, both the voltage of the direct current output by the first output end and the voltage of the direct current output by the second output end are reduced.

In this embodiment of this application, when a voltage on a direct current side of the inverter circuit 210 is greater than or equal to a first voltage threshold or a voltage on an alternating current side of the inverter circuit 210 is greater than or equal to a second voltage threshold, the controller 250 is configured to increase a voltage of the direct current output by the voltage regulation circuit 230. In addition, when a sum of the voltage of the direct current output by the voltage regulation circuit 230 to the analog control circuit 240 and the voltage of the direct current output by the second output end is greater than a third voltage threshold, the analog control circuit 240 is configured to reduce the duty cycle of the switching transistor in the auxiliary power supply, to reduce the voltage of the direct current output by the first output end and the voltage of the direct current output by the second output end.

In this embodiment of this application, when the voltage on the direct current side of the inverter circuit 210 is greater than or equal to the first voltage threshold or the voltage on the alternating current side of the inverter circuit 210 is greater than or equal to the second voltage threshold, a voltage stress of the switching transistor in the inverter circuit is increased. To reduce the voltage stress, a drive voltage of the switching transistor may be adaptively adjusted. However, when a circuit parameter in the auxiliary power supply is determined, it is difficult to change the voltage of the direct current that is output by the output end of the auxiliary power supply and that is used to drive the switching transistor. In this embodiment of this application, the voltage regulation circuit is designed. When the voltage on the direct current side or the voltage on the alternating current side of the inverter circuit is greater than a corresponding voltage threshold, the controller 250 increases the voltage of the direct current output by the voltage regulation circuit. Correspondingly, a voltage of a direct current input by the input end of the analog control circuit 240 is increased. As a result, the voltage of the direct current input by the input end of the analog control circuit 240 is greater than the third voltage threshold preset by the analog control circuit 240. The third voltage threshold is usually difficult to change. Therefore, the voltage of the direct current input by the input end of the analog control circuit 240 needs to be reduced, to ensure that the voltage of the direct current input by the input end of the analog control circuit 240 is consistent with the third voltage threshold. Because the voltage of the direct current output by the first output end and the voltage of the direct current output by the second output end are positively correlated with the duty cycle of the switching transistor in the auxiliary power supply 220, the analog control circuit 240 reduces the duty cycle of the switching transistor in the auxiliary power supply, to reduce the voltage of the direct current output by the first output end and the voltage of the direct current output by the second output end, so that the voltage of the direct current input by the input end of the analog control circuit 240 is equal to the third voltage threshold. Through the foregoing adjustment, the voltage of the direct current output by the first output end is reduced, that is, the drive voltage used to drive the switching transistor in the inverter circuit 210 is reduced, so that the voltage stress of the switching transistor in the inverter circuit can be reduced, and therefore a risk that the switching transistor in the inverter circuit fails is reduced.

Specifically, the analog control circuit 240 may output a pulse width modulation (pulse width modulation, PWM) wave based on the direct current input by the input end, and a duty cycle of the PWM wave controls the switching transistor in the auxiliary power supply to be turned on or off. When the sum of the voltage of the direct current output by the voltage regulation circuit 230 to the analog control circuit 240 and the voltage of the direct current output by the second output end is greater than the third voltage threshold, the analog control circuit 240 reduces a duty cycle of the PWM wave output by the analog control circuit 240, so that an on duration of the switching transistor in the auxiliary power supply can be shortened, and therefore the voltage of the direct current output by the first output end and the voltage of the direct current output by the second output end can be reduced.

In this application, an example in which the first voltage threshold is 800 V and the third voltage threshold is 2.5 V is used. When the voltage of the direct current output by the second output end to the analog control circuit 240 is 2.0 V and the voltage of the direct current output by the voltage regulation circuit 230 to the analog control circuit 240 is 0.5 V, the sum of the voltage of the direct current output by the second output end to the analog control circuit 240 and the voltage of the direct current output by the voltage regulation circuit 230 to the analog control circuit 240 is 2.5 V, which is equal to the third voltage threshold. Therefore, the analog control circuit 240 does not change the duty cycle of the PWM wave output by the analog control circuit 240, so that the duty cycle of the switching transistor in the auxiliary power supply 220 is constant, and the voltages of the direct currents output by the first output end and the second output end of the auxiliary power supply 220 are constant.

When the voltage on the direct current side of the inverter circuit 210 is greater than or equal to 800 V, it indicates that the voltage on the direct current side of the inverter circuit is high, and the controller 250 needs to reduce the drive voltage used to drive the switching transistor in the inverter circuit 210. Specifically, the controller 250 increases the voltage of the direct current output by the voltage regulation circuit 230. For example, the controller 250 increases the voltage of the direct current output by the voltage regulation circuit 230 from 0.5 V to 1.0 V. When the voltage of the direct current output by the voltage regulation circuit 230 is 1.0 V, the sum of the voltage of the direct current output by the second output end to the analog control circuit 240 and the voltage of the direct current output by the voltage regulation circuit to the analog control circuit 240 is 3.0 V, which is greater than the third voltage threshold 2.5 V. In this case, the analog control circuit 240 may reduce the duty cycle of the PWM wave output by the analog control circuit 240, for example, reduce the duty cycle of the PWM wave from 0.8 to 0.6. Because the duty cycle of the PWM wave is reduced, the on duration of the switching transistor in the auxiliary power supply is reduced. Therefore, the voltage of the direct current output by the first output end can be reduced. In other words, the drive voltage used to drive the switching transistor in the inverter circuit 210 is reduced.

Similarly, when the voltage on the alternating current side of the inverter circuit 210 is greater than or equal to the second voltage threshold, a control process is similar to the foregoing process. Details are not described again.

In this application, the sum of the voltages of the direct currents output by the voltage regulation circuit and the second output end to the analog control circuit is compared with the third voltage threshold preset by the analog control circuit, to dynamically change the duty cycle of the switching transistor in the auxiliary power supply. Further, when the circuit parameter in the auxiliary power supply (for example, a turn ratio of the transformer in the auxiliary power supply) is determined, voltage values of the direct currents output by the first output end and the second output end are adaptively adjusted. The voltage value of the direct current output by the first output end is changed, so that an overstress failure of the switching transistor in the inverter circuit caused by a voltage fluctuation occurred on the direct current side or the alternating current side of the inverter circuit can be avoided. Further, the circuit parameter in the auxiliary power supply has been determined. In this case, when the voltage value of the direct current output by the first output end changes, the voltage value of the direct current output by the second output end also changes synchronously. Therefore, the sum of the voltages of the direct currents output by the voltage regulation circuit and the second output end to the analog control circuit is changed, and closed-loop control is implemented. With the disposition, control logic is simplified, hardware replacement is avoided, and the overstress failure of the switching transistor in the inverter circuit is effectively avoided.

The following describes a specific topology of the voltage regulation circuit.

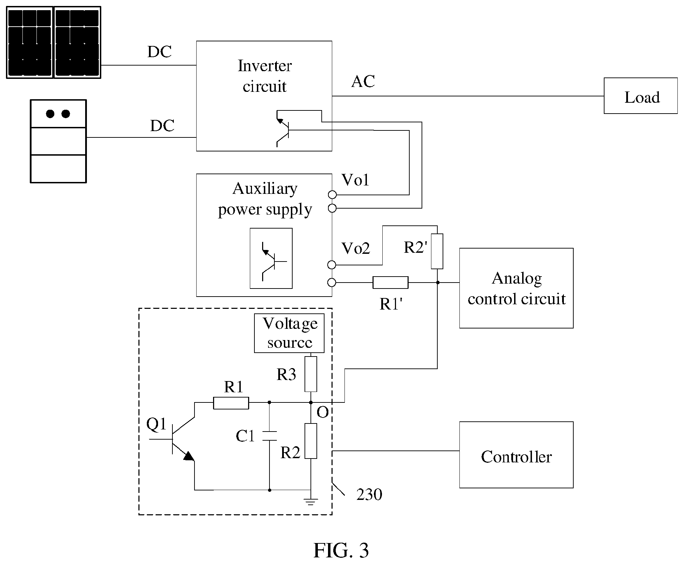

As shown in FIG. 3, in an embodiment, the voltage regulation circuit includes a switching transistor Q1, a first resistor R1, a second resistor R2, a third resistor R3, and a capacitor C1. A collector of the switching transistor Q1 in the voltage regulation circuit is connected to the first resistor R1. An emitter of the switching transistor Q1 in the voltage regulation circuit is connected to the second resistor R2. A series connection point between the first resistor R1 and the second resistor R2 is connected to the third resistor R3, the capacitor C1 is connected in parallel to two ends of the second resistor R2, and the series connection point between the first resistor R1 and the second resistor R2 is used to connect to the analog control circuit 240.

In this embodiment of this application, a resistance value of the third resistor R3 is greater than a resistance value of the first resistor R1, the resistance value of the third resistor R3 is less than a resistance value of the second resistor R2, and the voltage of the direct current output by the voltage regulation circuit 230 to the analog control circuit 240 is negatively correlated with the duty cycle of the switching transistor in the voltage regulation circuit 230.

In this embodiment of this application, the resistance value of the resistor R3 is greater than the resistance value of the resistor R1, and the resistance value of the resistor R3 is less than the resistance value of the resistor R2. Therefore, the resistance value of the resistor R1 is less than the resistance value of the resistor R2. When the switching transistor Q1 is turned off, a voltage output by a voltage source forms a loop through the resistor R3 and the resistor R2. In this process, a voltage of the capacitor C1 is a voltage at two ends of the resistor R2. When the switching transistor Q1 is turned on, because the resistance value of the resistor R1 is less than the resistance value of the resistor R2, the voltage output by the voltage source forms a loop through the resistor R3, the resistor R1, and the switching transistor Q1. In this process, the voltage of the capacitor C1 is a voltage at two ends of the resistor R1. Voltages of the capacitor C1 are different in different states of the switching transistor Q1. Therefore, duty cycles of the switching transistor Q1 are different, and voltages of direct currents output by the voltage regulation circuit to the analog control circuit 240 are different.

Specifically, it is assumed that the resistance value of the resistor R1 is 1 Ω, the resistance value of the resistor R2 is 0.1 Ω, the resistance value of the resistor R3 is 10 Ω, and the voltage output by the voltage source is 3.3 V. When the switching transistor Q1 is turned off, the voltage output by the voltage source forms a loop through the resistor R3 and the resistor R2, the voltage at two ends of the resistor R3 is 0.3 V, and the voltage at the two ends of the resistor R2 is 3.0 V. In this case, the capacitor C1 is charged, a voltage of the capacitor C1 after charging is the voltage between the two ends of the resistor R2, that is, 3.0 V. When the switching transistor Q1 is turned on, the voltage output by the voltage source forms the loop through the resistor R3, the resistor R1, and the switching transistor Q1. The voltage at the two ends of the resistor R3 is 3 V, and the voltage at the two ends of the resistor R1 is 0.3 V. In this case, the capacitor C1 is discharged, the voltage of the capacitor C1 after discharging is the voltage at the two ends of the resistor R1, that is, 0.3 V. When the switching transistor is repeatedly turned on or off, the capacitor C1 may be repeatedly charged and discharged. After the capacitor C1 is charged and discharged for a plurality of times, the voltage of the capacitor C1 is finally stabilized at a specific voltage value. In this case, the voltage of the direct current output by the voltage regulation circuit 230 to the analog control circuit 240 is the stabilized voltage value.

With reference to the foregoing analysis, a larger duty cycle of the switching transistor Q1 indicates a smaller finally stabilized voltage value of the capacitor C1. A smaller duty cycle of the switching transistor Q1 indicates a larger finally stabilized voltage value of the capacitor C1. Therefore, to increase the voltage of the direct current output by the voltage regulation circuit to the analog control circuit 240, the duty cycle of the switching transistor Q1 is reduced.

In this embodiment of this application, a specific circuit topology of the voltage regulation circuit is designed. In different states of the switching transistor, voltages of the capacitor are different. The resistance value of the third resistor is greater than the resistance value of the first resistor, and the resistance value of the third resistor is less than the resistance value of the second resistor. In this case, compared with a case in which the switching transistor in the voltage regulation circuit is in an off state, when the switching transistor in the voltage regulation circuit is in an on state, the voltage of the capacitor is relatively small. Therefore, the voltage of the direct current output by the voltage regulation circuit to the analog control circuit is negatively correlated with the duty cycle of the switching transistor in the voltage regulation circuit. In this way, when the controller reduces the duty cycle of the switching transistor in the voltage regulation circuit, the voltage of the direct current output by the voltage regulation circuit to the analog control circuit is increased.

As described above, when the voltage on the direct current side of the inverter circuit 210 is greater than or equal to 800 V, the controller 250 increases the voltage of the direct current output by the voltage regulation circuit 230, to reduce the voltage of the direct current output by the output end of the auxiliary power supply. However, in a process in which the controller 250 specifically adjusts the voltage of the direct current output by the voltage regulation circuit 230, the voltage of the direct current output by the voltage regulation circuit 230 may not be accurately adjusted at a time. In this case, the controller may adjust the voltage of the direct current output by the voltage regulation circuit 230 by using a feedforward step and a proportional integral (proportional integral, PI) step, to increase a regulation rate of the voltage of the direct current output by the output end of the auxiliary power supply.

For example, that the first voltage threshold is 800 V and the third voltage threshold is 2.5 V is still used as an example. When the voltage on the direct current side of the inverter circuit 210 is greater than or equal to 800 V, the controller 250 needs to increase the voltage of the direct current output by the voltage regulation circuit 230, for example, the controller 250 needs to increase the voltage of the direct current output by the voltage regulation circuit 230 from 0.5 V to 1.0 V. The controller 250 may first roughly adjust, by using the feedforward step, the voltage of the direct current output by the voltage regulation circuit 230. For example, the controller 250 may quickly increase the voltage of the direct current output by the voltage regulation circuit 230 from 0.5 V to a voltage range close to 1.0 V, for example, 0.9 V to 1.1 V. When the voltage of the direct current output by the voltage regulation circuit 230 is increased from 0.5 V to any voltage value in the voltage range from 0.9 V to 1.1 V, for example, 0.95 V, the controller 250 increases the voltage of the direct current output by the voltage regulation circuit 230 from 0.95 V to 1.0 V. In this way, the voltage of the direct current output by the voltage regulation circuit 230 is quickly adjusted, to increase the regulation rate of the voltage of the direct current output by the output end of the auxiliary power supply.

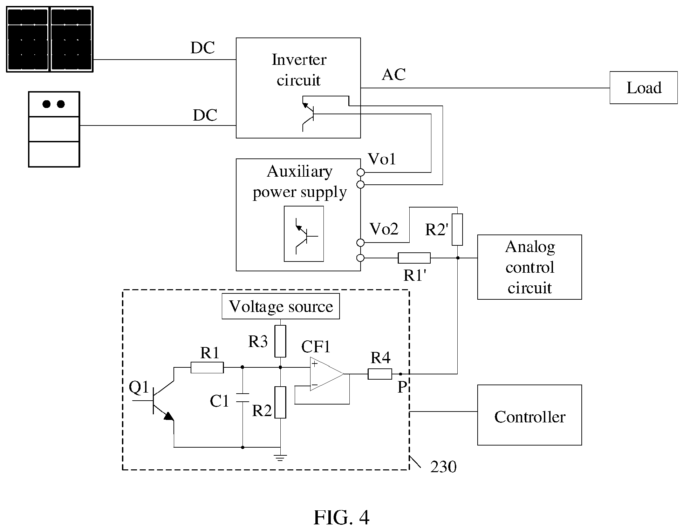

As shown in FIG. 4, in an embodiment, the voltage regulation circuit 230 further includes an operational amplifier CF1 and a fourth resistor R4. A non-inverting input end of the operational amplifier CF1 is connected to the series connection point between the first resistor R1 and the second resistor R2, an inverting input end of the operational amplifier CF1 is connected to an output end of the operational amplifier CF1, the output end of the operational amplifier CF1 is connected to one end of the fourth resistor R4, and the other end of the fourth resistor R4 is configured to connect to the analog control circuit 240.

In this embodiment of this application, the operational amplifier CF1 and the resistor R4 are disposed in the voltage regulation circuit 230. The operational amplifier CF1 may isolate the resistor R4 from another component of the voltage regulation circuit 230, for example, the resistor R1, the resistor R2, and the resistor R3 of the voltage regulation circuit 230. Therefore, a process of calculating the voltage of the direct current output by the voltage regulation circuit 230 to the analog control circuit 240 can be simplified, and calculation efficiency can be improved. This helps reduce, when the voltage on the direct current side of the inverter circuit 210 is greater than or equal to the first voltage threshold or the voltage on the alternating current side of the inverter circuit 210 is greater than or equal to the second voltage threshold, the drive voltage used to drive the switching transistor in the inverter circuit 210 in time, so that a duration in which the voltage stress of the switching transistor in the inverter circuit can be shortened, and the risk that the switching transistor fails can be further reduced.

If the operational amplifier CF1 and the resistor R4 are not disposed in the voltage regulation circuit 230, the voltage of the direct current output by the voltage regulation circuit 230 to the analog control circuit 240 is a voltage of a connection point at which three circuits, that is, the resistor R1, the resistor R2, and the resistor R3, are connected, for example, a voltage at a point O shown in FIG. 3. If the voltage regulation circuit 230 needs to output a direct current with a voltage of 1.5 V to the analog control circuit 240, and the voltage at the point O is related to three resistors, that is, the resistor R1, the resistor R2, and the resistor R3, it is difficult for the controller to accurately adjust the duty cycle of the switching transistor Q1 to enable the voltage regulation circuit 230 to output the direct current with the voltage of 1.5 V to the analog control circuit 240.

When the operational amplifier CF1 and the resistor R4 are disposed in the voltage regulation circuit 230, the voltage of the direct current output by the voltage regulation circuit 230 to the analog control circuit 240 is a voltage obtained through voltage division performed by the resistor R4, that is, a voltage at a point P shown in FIG. 4. If the voltage regulation circuit 230 needs to output the direct current with the voltage of 1.5 V to the analog control circuit 240, due to existence of the operational amplifier CF1, the voltage at the point P is related to the resistor R4, so that the controller may accurately adjust the duty cycle of the switching transistor Q1 to enable the voltage regulation circuit 230 to output the direct current with the voltage of 1.5 V to the analog control circuit 240.

In this embodiment of this application, the duty cycle of the switching transistor Q1 may be obtained by using a digital control circuit based on a voltage of a direct current. The voltage of the direct current may be a voltage of a direct current output by a third output end of the auxiliary power supply. Therefore, in this embodiment of this application, a voltage sampling circuit and the digital control circuit may be further included. The voltage sampling circuit is configured to sample the voltage of the direct current output by the third output end. The digital control circuit may generate a PWM wave based on a voltage value of the direct current output by the third output end, to control the switching transistor Q1 to be turned on or off.

The voltage sampling circuit in this embodiment of this application may include a plurality of circuit topologies. The following provides specific descriptions with reference to the accompanying drawings.

### Circuit topology 1:

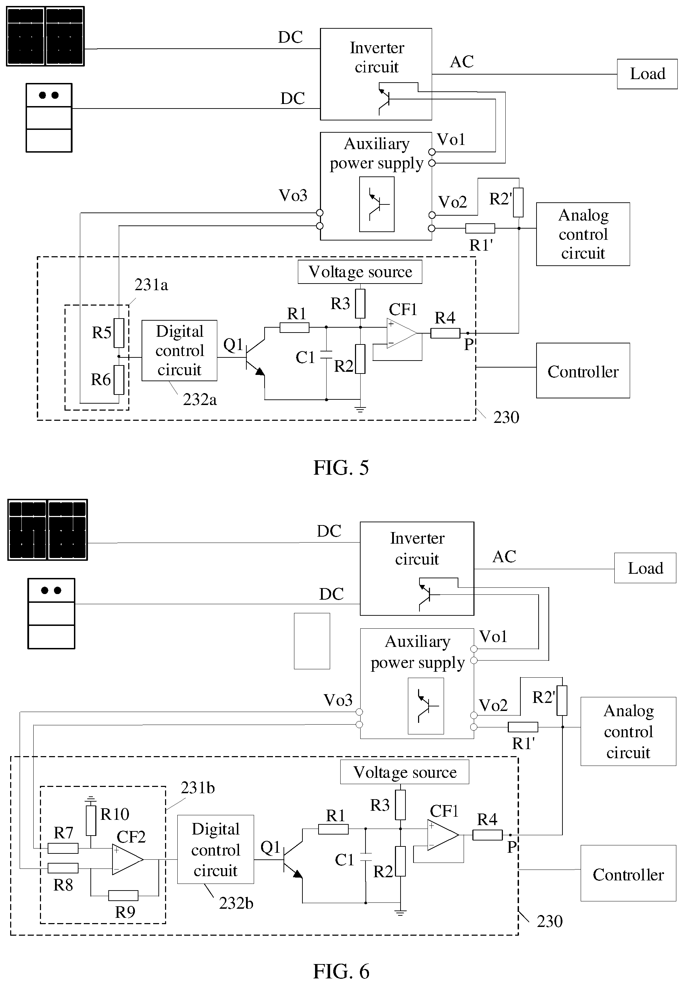

Refer to FIG. 5. It can be learned that a voltage sampling circuit 231a includes a resistor R5 and a resistor R6, and a series connection point between the resistor R5 and the resistor R6 is connected to a digital control circuit 232a. Therefore, a voltage of a direct current output by the voltage sampling circuit 231a to the digital control circuit 232a is a voltage of the series connection point between the resistor R5 and the resistor R6.

It is assumed that resistance values of the resistor R5 and the resistor R6 are equal. When a voltage of a direct current output by a third output end Vo3 is 20 V, the voltage of the series connection point between the resistor R5 and the resistor R6 is 10 V. In other words, the voltage of the direct current output by the voltage sampling circuit 231a to the digital control circuit 232a is 10 V. Therefore, the digital control circuit 232a may generate, based on the voltage of 10 V, the PWM wave used to control the switching transistor Q1 to be turned on or off.

### Circuit topology 2:

Refer to FIG. 6. It can be learned that a voltage sampling circuit 231b includes a resistor R7, a resistor R8, a resistor R9, a resistor R10, and an operational amplifier CF2. The resistor R7 and the resistor R8 are connected to two interfaces of a third output end Vo3 respectively. Therefore, a voltage of a direct current input by an input end of the voltage sampling circuit 231b is a voltage of a direct current output by the third output end Vo3. In addition, because the voltage sampling circuit 231b is a differential amplifer circuit, and a proportional coefficient is R9/R8, a voltage of a direct current output by an output end of the voltage sampling circuit 231b is a product of the voltage of the direct current input by the input end of the voltage sampling circuit 231b and the proportional coefficient.

It is assumed that the resistor R7 = R8 = 10 Ω, and R9 = R10 = 5 Ω. When the voltage of the direct current output by the third output end Vo3 is 20 V, the voltage of the direct current input by the input end of the voltage sampling circuit 231b is also 20 V. The voltage of the direct current output by the output end of the voltage sampling circuit 231b is 20*5/10 = 10 V. In other words, the voltage of the direct current output by the voltage sampling circuit 231b to the digital control circuit 232b is 10 V. Therefore, the digital control circuit 232b may generate, based on the voltage of 10 V, the PWM wave used to control the switching transistor Q1 to be turned on or off.

It should be understood that, in this embodiment of this application, there is no absolute correlation between the voltage value of the direct current and a duty cycle of the PWM wave generated by the digital control circuit 232a or the digital control circuit 232b. In other words, the voltage of the direct current output by the third output end is not positively correlated with the duty cycle of the PWM wave generated by the digital control circuit 232a or the digital control circuit 232b. Alternatively, the voltage of the direct current output by the third output end is not negatively correlated with the duty cycle of the PWM wave generated by the digital control circuit 232a or the digital control circuit 232b. The direct current output by the third output end only provides a voltage value for the digital control circuit 232a or the digital control circuit 232b, and the digital control circuit 232a or the digital control circuit 232b can generate a PWM wave with a variable duty cycle based on the voltage value. A specific duty cycle of the PWM wave may be determined based on a specific working condition.

With reference to the foregoing descriptions, the voltage of the direct current output by the voltage regulation circuit 230 to the analog control circuit 240 is negatively correlated with the duty cycle of the switching transistor in the voltage regulation circuit 230. Therefore, when the controller 250 needs to increase the voltage of the direct current output by the voltage regulation circuit 230, the controller 250 needs to reduce the duty cycle of the switching transistor Q1 in the voltage regulation circuit 230, that is, reduce the duty cycle of the PWM wave generated by the digital control circuit 232a or the digital control circuit 232b.

In an embodiment, the third output end and the first output end are different output ends. In other words, a voltage of a direct current output by one of a plurality of output ends of the auxiliary power supply is used to drive the switching transistor in the inverter circuit, and a voltage of a direct current output by another output end of the plurality of output ends of the auxiliary power supply is a voltage of a direct current input by an input end of the voltage sampling circuit. When the voltage of the direct current output by the first output end changes by a specific value, a change amplitude of the voltage of the direct current output by the third output end is not completely the same as a change amplitude of the voltage of the direct current output by the first output end. In other words, a change amplitude of the drive voltage used to drive the switching transistor in the inverter circuit is not completely consistent with a change amplitude of the voltage of the direct current input by the input end of the voltage sampling circuit, so that cross regulation of the auxiliary power supply can be improved when the drive voltage of the switching transistor in the inverter circuit can be adjusted.

In an embodiment, the third output end is an output end with a largest current in direct currents output by a plurality of first output ends.

Specifically, it is assumed that direct currents output by three output ends, that is, an output end a, an output end b, and an output end c of the auxiliary power supply are all used to drive the switching transistor in the inverter circuit, and currents of the direct current output by the three output ends are respectively 0.5 A, 1.0 A, and 1.5 A. When an expected value of the drive voltage used to drive the switching transistor in the inverter circuit is 20 V, it is assumed that voltages of the direct currents output by the three output ends are all 20 V. Because currents of the direct currents are different and losses are different, voltages actually used to drive the switching transistor in the inverter circuit may be reduced gradually, for example, the voltages may be sequentially 19.5 V, 19 V, and 18.5 V.

If the voltage sampling circuit samples the voltage of the direct current output by the output end a, that is, a voltage value sampled by the voltage sampling circuit is 19.9 V, a difference between the voltage value and a preset target value 10 V in the digital control circuit 232a is small, which is equivalent to a small adjustment coefficient. If the voltage sampling circuit samples the voltage of the direct current output by the output end c, that is, the voltage value sampled by the voltage sampling circuit is 18.5 V, the difference between the voltage value and the preset target value 10 V in the digital control circuit 232a is large, which is equivalent to a large adjustment coefficient.

Compared with a case in which the voltage sampling circuit samples the voltage of the direct current output by the output end a, when the voltage sampling circuit samples the voltage of the direct current output by the output end c, the adjustment coefficient of the digital control circuit 232a is relatively large. In this case, a duty cycle output by the digital control circuit 232a is relatively large, the voltage of the direct current output by the voltage regulation circuit 230 to the analog control circuit 240 is relatively small, and the voltages of the direct currents output by the three output ends, that is, the output end a, the output end b, and the output end c of the auxiliary power supply are relatively large. For example, the voltages of the direct currents output by the three output ends may be sequentially 20.5 V, 20 V, and 19.5 V, and the voltages actually used to drive the switching transistor in the inverter circuit may be sequentially 20 V, 19.5 V, and 19 V. A deviation between the three voltage values and the expected value of the drive voltage ranges from 0% to 5%.

However, compared with a case in which the voltage sampling circuit samples the voltage of the direct current output by the output end c, when the voltage sampling circuit samples the voltage of the direct current output by the output end a, the duty cycle output by the digital control circuit 232a is relatively small, the voltage of the direct current output by the voltage regulation circuit 230 to the analog control circuit 240 is relatively large, and the voltages of the direct currents output by the three output ends, that is, the output end a, the output end b, and the output end c of the auxiliary power supply are relatively small. For example, the voltages of the direct currents output by the three output ends may be sequentially 20 V, 19.5 V, and 19 V, and the voltages actually used to drive the switching transistor in the inverter circuit may be sequentially 19.5 V, 19 V, and 18.5 V. A deviation between the three voltage values and the expected value of the drive voltage ranges from 2.5% to 7.5%, which is significantly larger than the deviation obtained when the voltage sampling circuit samples the voltage of the direct current output by the output end c.

Therefore, in this embodiment of this application, the third output end is the output end with the largest current in the direct currents output by the plurality of first output ends, so that a deviation between a drive voltage required by the switching transistor in the inverter circuit and an actual drive voltage can be reduced, and a probability that the switching transistor is abnormal can be reduced. This helps prolong a service life of the switching transistor.

This application further provides a power converter. Refer to FIG. 2. The power converter includes an inverter circuit 210, an auxiliary power supply 220, a voltage regulation circuit 230, an analog control circuit 240, and a controller 250. The inverter circuit 210 is configured to: convert a direct current from a photovoltaic module or an energy storage battery into an alternating current, and transmit the alternating current to a load. The auxiliary power supply 220 includes a first output end Vo1, a second output end Vo2, and a switching transistor. A direct current output by the first output end Vo1 is used to drive a switching transistor in the inverter circuit 210, and the second output end Vo2 is configured to output a direct current to the analog control circuit 240. The voltage regulation circuit 230 is configured to output a direct current to the analog control circuit 240. The analog control circuit 240 is configured to change a duty cycle of the switching transistor in the auxiliary power supply 220, and a voltage of the direct current output by the first output end Vo1 and a voltage of the direct current output by the second output end Vo2 are positively correlated with the duty cycle of the switching transistor in the auxiliary power supply 220.

In this embodiment of this application, when a voltage on a direct current side of the inverter circuit is less than or equal to a fourth voltage threshold or a voltage on an alternating current side of the inverter circuit is less than or equal to a fifth voltage threshold, the controller is configured to reduce a voltage of the direct current output by the voltage regulation circuit. When a sum of the voltage of the direct current output by the voltage regulation circuit to the analog control circuit and the voltage of the direct current output by the second output end is less than a third voltage threshold, the analog control circuit is configured to increase the duty cycle of the switching transistor in the auxiliary power supply, to increase the voltage of the direct current output by the first output end and the voltage of the direct current output by the second output end.

In this embodiment of this application, when the voltage on the direct current side of the inverter circuit 210 is less than or equal to the fourth voltage threshold or the voltage on the alternating current side of the inverter circuit 210 is less than or equal to the fifth voltage threshold, the controller 250 reduces the voltage of the direct current output by the voltage regulation circuit. Correspondingly, a voltage of a direct current input by an input end of the analog control circuit 240 is reduced. As a result, the voltage of the direct current input by the input end of the analog control circuit 240 is less than the third voltage threshold preset by the analog control circuit 240. The third voltage threshold is usually difficult to change. Therefore, the voltage of the direct current input by the input end of the analog control circuit 240 needs to be reduced, to ensure that the voltage of the direct current input by the input end of the analog control circuit 240 is consistent with the third voltage threshold. Because the voltage of the direct current output by the first output end and the voltage of the direct current output by the second output end are positively correlated with the duty cycle of the switching transistor in the auxiliary power supply 220, the analog control circuit 240 increases the duty cycle of the switching transistor in the auxiliary power supply 220, to increase the voltage of the direct current output by the first output end and the voltage of the direct current output by the second output end, so that the voltage of the direct current input by the input end of the analog control circuit 240 is equal to the third voltage threshold. Through the foregoing adjustment, the voltage of the direct current output by the first output end is increased, that is, a drive voltage used to drive the switching transistor in the inverter circuit 210 is increased, so that a loss of the switching transistor in the inverter circuit can be reduced, and a service life of the switching transistor can be prolonged.

Specifically, when the sum of the voltage of the direct current output by the voltage regulation circuit 230 to the analog control circuit 240 and the voltage of the direct current output by the second output end is less than the third voltage threshold, the analog control circuit 240 increases a duty cycle of a PWM wave output by the analog control circuit 240, so that an on duration of the switching transistor in the auxiliary power supply 220 can be increased, and therefore the voltage of the direct current output by the first output end and the voltage of the direct current output by the second output end can be increased.

In this application, an example in which the fourth voltage threshold is 700 V and the third voltage threshold is 2.5 V is used. When the voltage of the direct current output by the second output end to the analog control circuit 240 is 2.0 V and the voltage of the direct current output by the voltage regulation circuit 230 to the analog control circuit 240 is 0.5 V, the sum of the voltage of the direct current output by the second output end to the analog control circuit 240 and the voltage of the direct current output by the voltage regulation circuit 230 to the analog control circuit 240 is 2.5 V, which is equal to the third voltage threshold. Therefore, the analog control circuit 240 does not change the duty cycle of the PWM wave output by the analog control circuit 240, so that the duty cycle of the switching transistor in the auxiliary power supply 220 is constant, and the voltages of the direct currents output by the first output end and the second output end of the auxiliary power supply 220 are constant.

When the voltage on the direct current side of the inverter circuit 210 is less than or equal to 700 V, it indicates that the voltage on the direct current side of the inverter circuit is low, and the controller 250 needs to increase the drive voltage used to drive the switching transistor in the inverter circuit 210. Specifically, the controller 250 reduces the voltage of the direct current output by the voltage regulation circuit 230. For example, the controller 250 reduces the voltage of the direct current output by the voltage regulation circuit 230 from 0.5 V to 0.2 V. When the voltage of the direct current output by the voltage regulation circuit 230 is 0.2 V, the sum of the voltage of the direct current output by the second output end to the analog control circuit 240 and the voltage of the direct current output by the voltage regulation circuit to the analog control circuit 240 is 2.2 V, which is less than the third voltage threshold 2.5 V. In this case, the analog control circuit 240 may increase the duty cycle of the PWM wave output by the analog control circuit 240, for example, increase the duty cycle of the PWM wave from 0.8 to 0.9. Because the duty cycle of the PWM wave is increased, the on duration of the switching transistor in the auxiliary power supply is increased. Therefore, the voltage of the direct current output by the first output end can be increased. In other words, the drive voltage used to drive the switching transistor in the inverter circuit 210 is increased.

Similarly, when the voltage on the alternating current side of the inverter circuit 210 is less than or equal to the fifth voltage threshold, a control process is similar to the foregoing process. Details are not described again.

In this application, the sum of the voltages of the direct currents output by the voltage regulation circuit and the second output end to the analog control circuit is compared with the third voltage threshold preset by the analog control circuit, to dynamically change the duty cycle of the switching transistor in the auxiliary power supply. Further, when a circuit parameter in the auxiliary power supply (for example, a turn ratio of a transformer in the auxiliary power supply) is determined, voltage values of the direct currents output by the first output end and the second output end are adaptively adjusted. The voltage value of the direct current output by the first output end is changed, so that the loss of the switching transistor in the inverter circuit caused by a voltage fluctuation occurred on the direct current side or the alternating current side of the inverter circuit can be avoided. Further, the circuit parameter in the auxiliary power supply has been determined. In this case, when the voltage value of the direct current output by the first output end changes, the voltage value of the direct current output by the second output end also changes synchronously. Therefore, the sum of the voltages of the direct currents output by the voltage regulation circuit and the second output end to the analog control circuit is changed, and closed-loop control is implemented. With the disposition, control logic is simplified, hardware replacement is avoided, and the loss of the switching transistor in the inverter circuit is effectively avoided.

In an embodiment, the voltage regulation circuit includes a switching transistor Q1, a first resistor R1, a second resistor R2, a third resistor R3, and a capacitor C1. A collector of the switching transistor Q1 in the voltage regulation circuit is connected to the first resistor R1. An emitter of the switching transistor Q1 in the voltage regulation circuit is connected to the second resistor R2. A series connection point between the first resistor R1 and the second resistor R2 is connected to the third resistor R3, the capacitor C1 is connected in parallel to two ends of the second resistor R2, and the series connection point between the first resistor R1 and the second resistor R2 is used to connect to the analog control circuit 240.

In this embodiment of this application, a resistance value of the third resistor R3 is greater than a resistance value of the first resistor R1, the resistance value of the third resistor R3 is less than a resistance value of the second resistor R2, and the voltage of the direct current output by the voltage regulation circuit 230 to the analog control circuit 240 is negatively correlated with the duty cycle of the switching transistor in the voltage regulation circuit 230.

With reference to the foregoing analysis of FIG. 3, a larger duty cycle of the switching transistor Q1 indicates a smaller finally stabilized voltage value of the capacitor C1. A smaller duty cycle of the switching transistor Q1 indicates a larger finally stabilized voltage value of the capacitor C1. Therefore, to reduce the voltage of the direct current output by the voltage regulation circuit to the analog control circuit 240, the duty cycle of the switching transistor Q1 is increased.

In this embodiment of this application, a specific circuit topology of the voltage regulation circuit is designed. In different states of the switching transistor, voltages of the capacitor are different. The resistance value of the third resistor is greater than the resistance value of the first resistor, and the resistance value of the third resistor is less than the resistance value of the second resistor. In this case, compared with a case in which the switching transistor in the voltage regulation circuit is in an off state, when the switching transistor in the voltage regulation circuit is in an on state, the voltage of the capacitor is relatively small. Therefore, the voltage of the direct current output by the voltage regulation circuit to the analog control circuit is negatively correlated with the duty cycle of the switching transistor in the voltage regulation circuit. In this way, when the controller increases the duty cycle of the switching transistor in the voltage regulation circuit, the voltage of the direct current output by the voltage regulation circuit to the analog control circuit is reduced.

As described above, when the voltage on the direct current side of the inverter circuit 210 is less than or equal to 700 V, the controller 250 reduces the voltage of the direct current output by the voltage regulation circuit 230, to increase the voltage of the direct current output by the output end of the auxiliary power supply. However, in a process in which the controller 250 specifically adjusts the voltage of the direct current output by the voltage regulation circuit 230, the voltage of the direct current output by the voltage regulation circuit 230 may not be accurately adjusted at a time. In this case, the controller may adjust the voltage of the direct current output by the voltage regulation circuit 230 by using a feedforward step and a PI step, to increase a regulation rate of the voltage of the direct current output by the output end of the auxiliary power supply.

For example, that the fourth voltage threshold is 700 V and the third voltage threshold is 2.5 V is still used as an example. When the voltage on the direct current side of the inverter circuit 210 is less than or equal to 700 V, the controller 250 needs to reduce the voltage of the direct current output by the voltage regulation circuit 230, for example, the controller 250 needs to reduce the voltage of the direct current output by the voltage regulation circuit 230 from 0.5 V to 0.2 V. The controller 250 may first roughly adjust, by using the feedforward step, the voltage of the direct current output by the voltage regulation circuit 230. For example, the controller 250 may quickly reduce the voltage of the direct current output by the voltage regulation circuit 230 from 0.5 V to a voltage range close to 0.2 V, for example, 0.1 V to 0.3 V. When the voltage of the direct current output by the voltage regulation circuit 230 is reduced from 0.5 V to any voltage value in the voltage range from 0.1 V to 0.3 V, for example, 0.18 V, the controller 250 increases the voltage of the direct current output by the voltage regulation circuit 230 from 0.18 V to 0.2 V. In this way, the voltage of the direct current output by the voltage regulation circuit 230 is quickly adjusted, to increase the regulation rate of the voltage of the direct current output by the output end of the auxiliary power supply.

In an embodiment, the voltage regulation circuit 230 further includes an operational amplifier CF1 and a fourth resistor R4. A non-inverting input end of the operational amplifier CF1 is connected to the series connection point between the first resistor R1 and the second resistor R2, an inverting input end of the operational amplifier CF1 is connected to an output end of the operational amplifier CF1, the output end of the operational amplifier CF1 is connected to one end of the fourth resistor R4, and the other end of the fourth resistor R4 is configured to connect to the analog control circuit 240.

For a part that is not described in detail in this embodiment of this application, refer to the foregoing related content. Details are not described again.

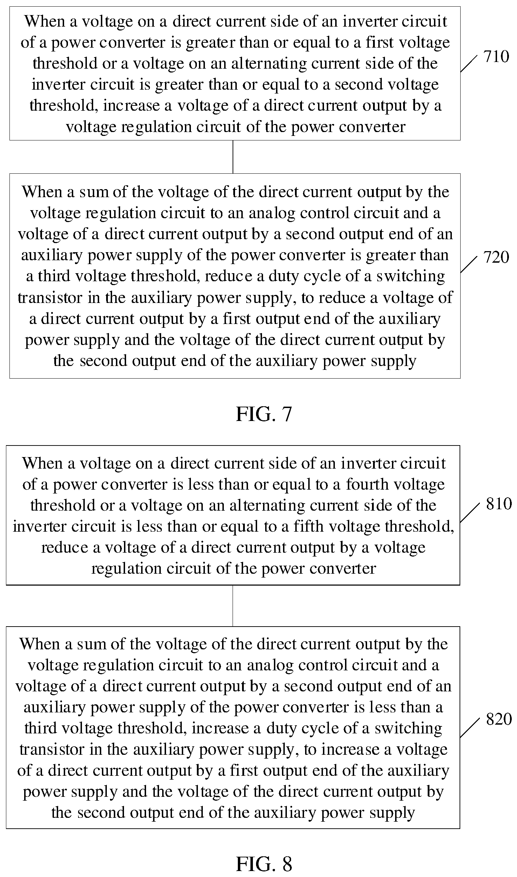

This application further provides a method for adjusting a drive voltage of a power converter. As shown in FIG. 7, the method includes steps 710 to 720.

710: When a voltage on a direct current side of an inverter circuit of the power converter is greater than or equal to a first voltage threshold or a voltage on an alternating current side of the inverter circuit is greater than or equal to a second voltage threshold, increase a voltage of a direct current output by a voltage regulation circuit of the power converter.

The voltage regulation circuit is connected to an analog control circuit of the power converter.

720: When a sum of the voltage of the direct current output by the voltage regulation circuit to the analog control circuit and a voltage of a direct current output by a second output end of an auxiliary power supply of the power converter is greater than a third voltage threshold, reduce a duty cycle of a switching transistor in the auxiliary power supply, to reduce a voltage of a direct current output by a first output end of the auxiliary power supply and the voltage of the direct current output by the second output end of the auxiliary power supply.

The direct current output by the first output end is used to drive a switching transistor in the inverter circuit, and the voltage of the direct current output by the first output end and the voltage of the direct current output by the second output end are positively correlated with the duty cycle of the switching transistor in the auxiliary power supply.

This application further provides a method for adjusting a drive voltage of a power converter. As shown in FIG. 8, the method includes steps 810 to 820.

810: When a voltage on a direct current side of an inverter circuit of the power converter is less than or equal to a fourth voltage threshold or a voltage on an alternating current side of the inverter circuit is less than or equal to a fifth voltage threshold, reduce a voltage of a direct current output by a voltage regulation circuit of the power converter.

The voltage regulation circuit is connected to an analog control circuit of the power converter.

820: When a sum of the voltage of the direct current output by the voltage regulation circuit to the analog control circuit and a voltage of a direct current output by a second output end of an auxiliary power supply of the power converter is less than a third voltage threshold, increase a duty cycle of a switching transistor in the auxiliary power supply, to increase a voltage of a direct current output by a first output end of the auxiliary power supply and the voltage of the direct current output by the second output end of the auxiliary power supply.

The direct current output by the first output end is used to drive a switching transistor in the inverter circuit, and the voltage of the direct current output by the first output end and the voltage of the direct current output by the second output end are positively correlated with the duty cycle of the switching transistor in the auxiliary power supply.

For content of the method for adjusting the drive voltage of the power converter in this embodiment of this application, refer to the foregoing related content. Details are not described again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power converter, comprising an inverter circuit (210), an auxiliary power supply (220), a voltage regulation circuit (230), an analog control circuit (240), and a controller (250), wherein the inverter circuit (210) is configured to: convert a direct current from a photovoltaic module or an energy storage battery into an alternating current, and transmit the alternating current to a load; the auxiliary power supply (220) comprises a first output end, a second output end, and a switching transistor, a direct current output by the first output end is used to drive a switching transistor in the inverter circuit (210), and the second output end is configured to output a direct current to the analog control circuit (240); the voltage regulation circuit (230) is configured to output a direct current to the analog control circuit (240); and the analog control circuit (240) is configured to change a duty cycle of the switching transistor in the auxiliary power supply (220), and a voltage of the direct current output by the first output end and a voltage of the direct current output by the second output end are positively correlated with the duty cycle of the switching transistor in the auxiliary power supply (220);
when a voltage on a direct current side of the inverter circuit (210) is greater than or equal to a first voltage threshold or a voltage on an alternating current side of the inverter circuit (210) is greater than or equal to a second voltage threshold, the controller (250) is configured to increase a voltage of the direct current output by the voltage regulation circuit (230); and
when a sum of the voltage of the direct current output by the voltage regulation circuit (230) to the analog control circuit (240) and the voltage of the direct current output by the second output end to the analog control circuit (240) is greater than a third voltage threshold, the analog control circuit (240) is configured to reduce the duty cycle of the switching transistor in the auxiliary power supply (220), to reduce the voltage of the direct current output by the first output end and the voltage of the direct current output by the second output end.

2. The power converter according to claim 1, wherein the voltage regulation circuit (230) comprises a switching transistor, a first resistor, a second resistor, a third resistor, and a capacitor, a collector of the switching transistor in the voltage regulation circuit (230) is connected to the first resistor, an emitter of the switching transistor in the voltage regulation circuit (230) is connected to the second resistor, a series connection point between the first resistor and the second resistor is connected to the third resistor, the capacitor is connected in parallel to two ends of the second resistor, and the series connection point between the first resistor and the second resistor is used to connect to the analog control circuit (240); and
a resistance value of the third resistor is greater than a resistance value of the first resistor, the resistance value of the third resistor is less than a resistance value of the second resistor, and the voltage of the direct current output by the voltage regulation circuit (230) to the analog control circuit (240) is negatively correlated with a duty cycle of the switching transistor in the voltage regulation circuit (230).

3. The power converter according to claim 2, wherein the voltage regulation circuit (230) further comprises an operational amplifier and a fourth resistor, a non-inverting input end of the operational amplifier is connected to the series connection point between the first resistor and the second resistor, an inverting input end of the operational amplifier is connected to an output end of the operational amplifier, the output end of the operational amplifier is connected to one end of the fourth resistor, and the other end of the fourth resistor is configured to connect to the analog control circuit (240).

4. A power converter, comprising an inverter circuit (210), an auxiliary power supply (220), a voltage regulation circuit (230), an analog control circuit (240), and a controller (250), wherein the inverter circuit (210) is configured to: convert a direct current from a photovoltaic module or an energy storage battery into an alternating current, and transmit the alternating current to a load; the auxiliary power supply (220) comprises a first output end, a second output end, and a switching transistor, a direct current output by the first output end is used to drive a switching transistor in the inverter circuit (210), and the second output end is configured to output a direct current to the analog control circuit (240); the voltage regulation circuit (230) is configured to output a direct current to the analog control circuit (240); and the analog control circuit (240) is configured to change a duty cycle of the switching transistor in the auxiliary power supply (220), and a voltage of the direct current output by the first output end and a voltage of the direct current output by the second output end are positively correlated with the duty cycle of the switching transistor in the auxiliary power supply (220);
when a voltage on a direct current side of the inverter circuit (210) is less than or equal to a fourth voltage threshold or a voltage on an alternating current side of the inverter circuit (210) is less than or equal to a fifth voltage threshold, the controller (250) is configured to reduce a voltage of the direct current output by the voltage regulation circuit (230); and
when a sum of the voltage of the direct current output by the voltage regulation circuit (230) to the analog control circuit (240) and the voltage of the direct current output by the second output end to the analog control circuit (240) is less than a third voltage threshold, the analog control circuit (240) is configured to increase the duty cycle of the switching transistor in the auxiliary power supply (220), to increase the voltage of the direct current output by the first output end and the voltage of the direct current output by the second output end.

5. The power converter according to claim 4, wherein the voltage regulation circuit (230) comprises a switching transistor, a first resistor, a second resistor, a third resistor, and a capacitor, a collector of the switching transistor in the voltage regulation circuit (230) is connected to the first resistor, an emitter of the switching transistor in the voltage regulation circuit (230) is connected to the second resistor, a series connection point between the first resistor and the second resistor is connected to the third resistor, the capacitor is connected in parallel to two ends of the second resistor, and the series connection point between the first resistor and the second resistor is used to connect to the analog control circuit (240); and
a resistance value of the third resistor is greater than a resistance value of the first resistor, the resistance value of the third resistor is less than a resistance value of the second resistor, and the voltage of the direct current output by the voltage regulation circuit (230) to the analog control circuit (240) is negatively correlated with a duty cycle of the switching transistor in the voltage regulation circuit (230).

6. The power converter according to claim 5, wherein the voltage regulation circuit (230) further comprises an operational amplifier and a fourth resistor, a non-inverting input end of the operational amplifier is connected to the series connection point between the first resistor and the second resistor, an inverting input end of the operational amplifier is connected to an output end of the operational amplifier, the output end of the operational amplifier is connected to one end of the fourth resistor, and the other end of the fourth resistor is configured to connect to the analog control circuit (240).

7. A method for adjusting a drive voltage of a power converter according to claim 1, wherein the method comprises:
when a voltage on a direct current side of an inverter circuit (210) of the power converter is greater than or equal to a first voltage threshold or a voltage on an alternating current side of the inverter circuit (210) is greater than or equal to a second voltage threshold, increasing (710) a voltage of a direct current output by a voltage regulation circuit (230) of the power converter, wherein the voltage regulation circuit (230) is connected to an analog control circuit (240) of the power converter; and
when a sum of the voltage of the direct current output by the voltage regulation circuit (230) to the analog control circuit (240) and a voltage of a direct current output by a second output end of an auxiliary power supply (220) of the power converter to the analog control circuit (240) is greater than a third voltage threshold, reducing (720) a duty cycle of a switching transistor in the auxiliary power supply (220), to reduce a voltage of a direct current output by a first output end of the auxiliary power supply (220) and the voltage of the direct current output by the second output end, wherein the direct current output by the first output end is used to drive a switching transistor in the inverter circuit (210), and the voltage of the direct current output by the first output end and the voltage of the direct current output by the second output end are positively correlated with the duty cycle of the switching transistor in the auxiliary power supply (220).

8. A method for adjusting a drive voltage of a power converter according to claim 4, wherein the method comprises:
when a voltage on a direct current side of an inverter circuit (210) of the power converter is less than or equal to a fourth voltage threshold or a voltage on an alternating current side of the inverter circuit (210) is less than or equal to a fifth voltage threshold, reducing (810) a voltage of a direct current output by a voltage regulation circuit (230) of the power converter, wherein the voltage regulation circuit (230) is connected to an analog control circuit (240) of the power converter; and
when a sum of the voltage of the direct current output by the voltage regulation circuit (230) to the analog control circuit (240) and a voltage of a direct current output by a second output end of an auxiliary power supply (220) of the power converter to the analog control circuit (240) is less than a third voltage threshold, increasing (820) a duty cycle of a switching transistor in the auxiliary power supply (220), to increase a voltage of a direct current output by a first output end of the auxiliary power supply (220) and the voltage of the direct current output by the second output end, wherein the direct current output by the first output end is used to drive a switching transistor in the inverter circuit (210), and the voltage of the direct current output by the first output end and the voltage of the direct current output by the second output end are positively correlated with the duty cycle of the switching transistor in the auxiliary power supply (220).

## Patentansprüche

1. Stromrichter, umfassend eine Wechselrichterschaltung (210), eine Hilfsstromversorgung (220), eine Spannungsregelschaltung (230), eine analoge Steuerschaltung (240) und eine Steuerung (250), wobei die Wechselrichterschaltung (210) konfiguriert ist zum: Umwandeln eines Gleichstrom aus einem Photovoltaikmodul oder einer Energiespeicherungsbatterie in einen Wechselstrom, und Senden des Wechselstroms an eine Last; die Hilfsstromversorgung (220) umfasst ein erstes Ausgangsende, ein zweites Ausgangsende und einen Schalttransistor, wobei ein von dem ersten Ausgangsende ausgegebener Gleichstrom verwendet wird, um einen Schalttransistor in der Wechselrichterschaltung (210) anzusteuern, und das zweite Ausgangsende konfiguriert ist, um einen Gleichstrom an die analoge Steuerschaltung (240) auszugeben; die Spannungsregelschaltung (230) ist konfiguriert, um einen Gleichstrom an die analoge Steuerschaltung (240) auszugeben; und die analoge Steuerschaltung (240) ist konfiguriert, um ein Tastverhältnis des Schalttransistors in der Hilfsstromversorgung (220) zu ändern, und eine Spannung des von dem ersten Ausgangsende ausgegebenen Gleichstroms und eine Spannung des von dem zweiten Ausgangsende ausgegebenen Gleichstroms positiv mit dem Tastverhältnis des Schalttransistors in der Hilfsstromversorgung (220) zu korrelieren;
wenn eine Spannung auf einer Gleichstromseite der Wechselrichterschaltung (210) größer als oder gleich einem ersten Spannungsschwellenwert ist oder eine Spannung auf einer Wechselstromseite der Wechselrichterschaltung (210) größer als oder gleich einem zweiten Spannungsschwellenwert ist, ist die Steuerung (250) dazu konfiguriert, eine Spannung des von der Spannungsregelschaltung (230) ausgegebenen Gleichstroms zu erhöhen; und
wenn eine Summe der Spannung des von der Spannungsregelschaltung (230) an die analoge Steuerschaltung (240) ausgegebenen Gleichstroms und der Spannung des von dem zweiten Ausgangsende an die analoge Steuerschaltung (240) ausgegebenen Gleichstroms größer als ein dritter Spannungsschwellenwert ist, ist die analoge Steuerschaltung (240) dazu konfiguriert, das Tastverhältnis des Schalttransistors in der Hilfsstromversorgung (220) zu verringern, um die Spannung des von dem ersten Ausgangsende ausgegebenen Gleichstroms und die Spannung des von dem zweiten Ausgangsende ausgegebenen Gleichstroms zu verringern.

2. Stromrichter nach Anspruch 1, wobei die Spannungsregelschaltung (230) einen Schalttransistor, einen ersten Widerstand, einen zweiten Widerstand, einen dritten Widerstand und einen Kondensator umfasst, ein Kollektor des Schalttransistors in der Spannungsregelschaltung (230) mit dem ersten Widerstand verbunden ist, ein Emitter des Schalttransistors in der Spannungsregelschaltung (230) mit dem zweiten Widerstand verbunden ist, ein Reihenschaltungspunkt zwischen dem ersten Widerstand und dem zweiten Widerstand mit dem dritten Widerstand verbunden ist, der Kondensator parallel zu zwei Enden des zweiten Widerstands geschaltet ist und der Reihenschaltungspunkt zwischen dem ersten Widerstand und dem zweiten Widerstand zur Verbindung mit der analogen Steuerschaltung (240) verwendet wird; und
ein Widerstandswert des dritten Widerstands größer ist als ein Widerstandswert des ersten Widerstands, der Widerstandswert des dritten Widerstands kleiner ist als ein Widerstandswert des zweiten Widerstands, und die Spannung des von der Spannungsregelschaltung (230) an die analoge Steuerschaltung (240) ausgegebenen Gleichstroms negativ mit einem Tastverhältnis des Schalttransistors in der Spannungsregelschaltung (230) korreliert ist.

3. Stromrichter nach Anspruch 2, wobei die Spannungsregelschaltung (230) ferner einen Operationsverstärker und einen vierten Widerstand umfasst, ein nicht-invertierendes Eingangsende des Operationsverstärkers mit dem Reihenschaltungspunkt zwischen dem ersten Widerstand und dem zweiten Widerstand verbunden ist, ein invertierendes Eingangsende des Operationsverstärkers mit einem Ausgangsende des Operationsverstärkers verbunden ist, das Ausgangsende des Operationsverstärkers mit einem Ende des vierten Widerstands verbunden ist und das andere Ende des vierten Widerstands konfiguriert ist, um mit der analogen Steuerschaltung (240) verbunden zu werden.

4. Stromrichter, umfassend eine Wechselrichterschaltung (210), eine Hilfsstromversorgung (220), eine Spannungsregelschaltung (230), eine analoge Steuerschaltung (240) und eine Steuerung (250), wobei die Wechselrichterschaltung (210) konfiguriert ist zum: Umwandeln eines Gleichstrom aus einem Photovoltaikmodul oder einer Energiespeicherungsbatterie in einen Wechselstrom, und Senden des Wechselstroms an eine Last; die Hilfsstromversorgung (220) umfasst ein erstes Ausgangsende, ein zweites Ausgangsende und einen Schalttransistor, wobei ein von dem ersten Ausgangsende ausgegebener Gleichstrom verwendet wird, um einen Schalttransistor in der Wechselrichterschaltung (210) anzusteuern, und das zweite Ausgangsende konfiguriert ist, um einen Gleichstrom an die analoge Steuerschaltung (240) auszugeben; die Spannungsregelschaltung (230) ist konfiguriert, um einen Gleichstrom an die analoge Steuerschaltung (240) auszugeben; und die analoge Steuerschaltung (240) ist konfiguriert, um ein Tastverhältnis des Schalttransistors in der Hilfsstromversorgung (220) zu ändern, und eine Spannung des von dem ersten Ausgangsende ausgegebenen Gleichstroms und eine Spannung des von dem zweiten Ausgangsende ausgegebenen Gleichstroms positiv mit dem Tastverhältnis des Schalttransistors in der Hilfsstromversorgung (220) zu korrelieren;
wenn eine Spannung auf einer Gleichstromseite der Wechselrichterschaltung (210) kleiner oder gleich einem vierten Spannungsschwellenwert ist oder eine Spannung auf einer Wechselstromseite der Wechselrichterschaltung (210) kleiner oder gleich einem fünften Spannungsschwellenwert ist, ist die Steuerung (250) dazu konfiguriert, eine Spannung des von der Spannungsregelschaltung (230) ausgegebenen Gleichstroms zu reduzieren; und
wenn eine Summe der Spannung des von der Spannungsregelschaltung (230) an die analoge Steuerschaltung (240) ausgegebenen Gleichstroms und der Spannung des von dem zweiten Ausgangsende an die analoge Steuerschaltung (240) ausgegebenen Gleichstroms kleiner als ein dritter Spannungsschwellenwert ist, ist die analoge Steuerschaltung (240) dazu konfiguriert, das Tastverhältnis des Schalttransistors in der Hilfsstromversorgung (220) zu erhöhen, um die Spannung des von dem ersten Ausgangsende ausgegebenen Gleichstroms und die Spannung des von dem zweiten Ausgangsende ausgegebenen Gleichstroms zu erhöhen.

5. Stromrichter nach Anspruch 4, wobei die Spannungsregelschaltung (230) einen Schalttransistor, einen ersten Widerstand, einen zweiten Widerstand, einen dritten Widerstand und einen Kondensator umfasst, ein Kollektor des Schalttransistors in der Spannungsregelschaltung (230) mit dem ersten Widerstand verbunden ist, ein Emitter des Schalttransistors in der Spannungsregelschaltung (230) mit dem zweiten Widerstand verbunden ist, ein Reihenschaltungspunkt zwischen dem ersten Widerstand und dem zweiten Widerstand mit dem dritten Widerstand verbunden ist, der Kondensator parallel zu zwei Enden des zweiten Widerstands geschaltet ist und der Reihenschaltungspunkt zwischen dem ersten Widerstand und dem zweiten Widerstand zur Verbindung mit der analogen Steuerschaltung (240) verwendet wird; und
ein Widerstandswert des dritten Widerstands größer ist als ein Widerstandswert des ersten Widerstands, der Widerstandswert des dritten Widerstands kleiner ist als ein Widerstandswert des zweiten Widerstands, und die Spannung des von der Spannungsregelschaltung (230) an die analoge Steuerschaltung (240) ausgegebenen Gleichstroms negativ mit einem Tastverhältnis des Schalttransistors in der Spannungsregelschaltung (230) korreliert ist.

6. Stromrichter nach Anspruch 5, wobei die Spannungsregelschaltung (230) ferner einen Operationsverstärker und einen vierten Widerstand umfasst, ein nicht-invertierendes Eingangsende des Operationsverstärkers mit dem Reihenschaltungspunkt zwischen dem ersten Widerstand und dem zweiten Widerstand verbunden ist, ein invertierendes Eingangsende des Operationsverstärkers mit einem Ausgangsende des Operationsverstärkers verbunden ist, das Ausgangsende des Operationsverstärkers mit einem Ende des vierten Widerstands verbunden ist und das andere Ende des vierten Widerstands konfiguriert ist, um mit der analogen Steuerschaltung (240) verbunden zu werden.

7. Verfahren zum Einstellen einer Ansteuerspannung eines Stromrichters nach Anspruch 1, wobei das Verfahren umfasst:
wenn eine Spannung auf einer Gleichstromseite einer Wechselrichterschaltung (210) des Stromrichters größer als oder gleich einem ersten Spannungsschwellenwert ist oder eine Spannung auf einer Wechselstromseite der Wechselrichterschaltung (210) größer als oder gleich einem zweiten Spannungsschwellenwert ist, Erhöhen (710) einer Spannung eines von einer Spannungsregelschaltung (230) des Stromrichters ausgegebenen Gleichstroms, wobei die Spannungsregelschaltung (230) mit einer analogen Steuerschaltung (240) des Stromrichters verbunden ist; und
wenn eine Summe der Spannung des von der Spannungsregelschaltung (230) an die analoge Steuerschaltung (240) ausgegebenen Gleichstroms und einer Spannung eines von einem zweiten Ausgangsende einer Hilfsstromversorgung (220) des Stromrichters an die analoge Steuerschaltung (240) ausgegebenen Gleichstroms größer als ein dritter Spannungsschwellenwert ist, Reduzieren (720) eines Tastverhältnisses eines Schalttransistors in der Hilfsstromversorgung (220), um eine Spannung eines von einem ersten Ausgangsende der Hilfsstromversorgung (220) ausgegebenen Gleichstroms und die Spannung von dem zweiten Ausgangsende ausgegebenen Gleichstroms zu reduzieren, wobei der von dem ersten Ausgangsende ausgegebene Gleichstrom verwendet wird, um einen Schalttransistor in der Wechselrichterschaltung (210) anzusteuern, und die Spannung von dem ersten Ausgangsende ausgegebenen Gleichstroms und die Spannung des von dem zweiten Ausgangsende ausgegebenen Gleichstroms positiv mit dem Tastverhältnis des Schalttransistors in der Hilfsstromversorgung (220) korreliert sind.

8. Verfahren zum Einstellen einer Ansteuerspannung eines Stromrichters nach Anspruch 4, wobei das Verfahren umfasst:
wenn eine Spannung auf einer Gleichstromseite einer Wechselrichterschaltung (210) des Stromrichters kleiner oder gleich einem vierten Spannungsschwellenwert ist oder eine Spannung auf einer Wechselstromseite der Wechselrichterschaltung (210) kleiner oder gleich einem fünften Spannungsschwellenwert ist, Reduzieren (810) einer Spannung eines von einer Spannungsregelschaltung (230) des Stromrichters ausgegebenen Gleichstroms, wobei die Spannungsregelschaltung (230) mit einer analogen Steuerschaltung (240) des Stromrichters verbunden ist; und
wenn eine Summe der Spannung des von der Spannungsregelschaltung (230) an die analoge Steuerschaltung (240) ausgegebenen Gleichstroms und einer Spannung eines von einem zweiten Ausgangsende einer Hilfsstromversorgung (220) des Stromrichters an die analoge Steuerschaltung (240) ausgegebenen Gleichstroms kleiner als ein dritter Spannungsschwellenwert ist, Erhöhen (820) eines Tastverhältnisses eines Schalttransistors in der Hilfsstromversorgung (220), um eine Spannung eines von einem ersten Ausgangsende der Hilfsstromversorgung (220) ausgegebenen Gleichstroms und die Spannung des von dem zweiten Ausgangsende ausgegebenen Gleichstroms zu erhöhen, wobei der von dem ersten Ausgangsende ausgegebene Gleichstrom verwendet wird, um einen Schalttransistor in der Wechselrichterschaltung (210) anzusteuern, und die Spannung des von dem ersten Ausgangsende ausgegebenen Gleichstroms und die Spannung des von dem zweiten Ausgangsende ausgegebenen Gleichstroms positiv mit dem Tastverhältnis des Schalttransistors in der Hilfsstromversorgung (220) korreliert sind.

## Revendications

1. Convertisseur de puissance, comprenant un circuit onduleur (210), une alimentation auxiliaire (220), un circuit de régulation de tension (230), un circuit de commande analogique (240), et un dispositif de commande (250), dans lequel le circuit onduleur (210) est configuré pour : convertir un courant continu provenant d'un module photovoltaïque ou d'une batterie de stockage d'énergie en un courant alternatif, et transmettre le courant alternatif à une charge ; l'alimentation auxiliaire (220) comprend une première extrémité de sortie, une seconde extrémité de sortie, et un transistor de commutation, un courant continu délivré par la première extrémité de sortie est utilisé pour piloter un transistor de commutation dans le circuit onduleur (210), et la seconde extrémité de sortie est configurée pour délivrer un courant continu au circuit de commande analogique (240) ; le circuit de régulation de tension (230) est configuré pour délivrer un courant continu au circuit de commande analogique (240) ; et le circuit de commande analogique (240) est configuré pour modifier un rapport cyclique du transistor de commutation dans l'alimentation auxiliaire (220), et une tension du courant continu délivré par la première extrémité de sortie et une tension du courant continu délivré par la seconde extrémité de sortie sont corrélées positivement avec le rapport cyclique du transistor de commutation dans l'alimentation auxiliaire (220) ; lorsqu'une tension sur un côté courant continu du circuit onduleur (210) est supérieure ou égale à un premier seuil de tension ou qu'une tension sur un côté courant alternatif du circuit onduleur (210) est supérieure ou égale à un deuxième seuil de tension, le dispositif de commande (250) est configuré pour augmenter une tension du courant continu délivré par le circuit de régulation de tension (230) ; et
lorsqu'une somme de la tension du courant continu délivré par le circuit de régulation de tension (230) au circuit de commande analogique (240) et de la tension du courant continu délivré par la seconde extrémité de sortie au circuit de commande analogique (240) est supérieure à un troisième seuil de tension, le circuit de commande analogique (240) est configuré pour réduire le rapport cyclique du transistor de commutation dans l'alimentation auxiliaire (220), pour réduire la tension du courant continu délivré par la première extrémité de sortie et la tension du courant continu délivré par la seconde extrémité de sortie.

2. Convertisseur de puissance selon la revendication 1, dans lequel le circuit de régulation de tension (230) comprend un transistor de commutation, une première résistance, une deuxième résistance, une troisième résistance, et un condensateur, un collecteur du transistor de commutation dans le circuit de régulation de tension (230) est connecté à la première résistance, un émetteur du transistor de commutation dans le circuit de régulation de tension (230) est connecté à la deuxième résistance, un point de connexion en série entre la première résistance et la deuxième résistance est connecté à la troisième résistance, le condensateur est connecté en parallèle à deux extrémités de la deuxième résistance, et le point de connexion en série entre la première résistance et la deuxième résistance est utilisé pour se connecter au circuit de commande analogique (240) ; et
une valeur de résistance de la troisième résistance est supérieure à une valeur de résistance de la première résistance, la valeur de résistance de la troisième résistance est inférieure à une valeur de résistance de la deuxième résistance, et la tension du courant continu délivré par le circuit de régulation de tension (230) au circuit de commande analogique (240) est corrélée négativement avec un rapport cyclique du transistor de commutation dans le circuit de régulation de tension (230).

3. Convertisseur de puissance selon la revendication 2, dans lequel le circuit de régulation de tension (230) comprend en outre un amplificateur opérationnel et une quatrième résistance, une extrémité d'entrée non inverseuse de l'amplificateur opérationnel est connectée au point de connexion en série entre la première résistance et la deuxième résistance, une extrémité d'entrée inverseuse de l'amplificateur opérationnel est connectée à une extrémité de sortie de l'amplificateur opérationnel, l'extrémité de sortie de l'amplificateur opérationnel est connectée à une extrémité de la quatrième résistance, et l'autre extrémité de la quatrième résistance est configurée pour se connecter au circuit de commande analogique (240).

4. Convertisseur de puissance, comprenant un circuit onduleur (210), une alimentation auxiliaire (220), un circuit de régulation de tension (230), un circuit de commande analogique (240), et un dispositif de commande (250), dans lequel le circuit onduleur (210) est configuré pour : convertir un courant continu provenant d'un module photovoltaïque ou d'une batterie de stockage d'énergie en un courant alternatif, et transmettre le courant alternatif à une charge ; l'alimentation auxiliaire (220) comprend une première extrémité de sortie, une seconde extrémité de sortie, et un transistor de commutation, un courant continu délivré par la première extrémité de sortie est utilisé pour piloter un transistor de commutation dans le circuit onduleur (210), et la seconde extrémité de sortie est configurée pour délivrer un courant continu au circuit de commande analogique (240) ; le circuit de régulation de tension (230) est configuré pour délivrer un courant continu au circuit de commande analogique (240) ; et le circuit de commande analogique (240) est configuré pour modifier un rapport cyclique du transistor de commutation dans l'alimentation auxiliaire (220), et une tension du courant continu délivré par la première extrémité de sortie et une tension du courant continu délivré par la seconde extrémité de sortie sont corrélées positivement avec le rapport cyclique du transistor de commutation dans l'alimentation auxiliaire (220) ; lorsqu'une tension sur un côté courant continu du circuit onduleur (210) est inférieure ou égale à un quatrième seuil de tension ou qu'une tension sur un côté courant alternatif du circuit onduleur (210) est inférieure ou égale à un cinquième seuil de tension, le dispositif de commande (250) est configuré pour réduire une tension du courant continu délivré par le circuit de régulation de tension (230) ; et lorsqu'une somme de la tension du courant continu délivré par le circuit de régulation de tension (230) au circuit de commande analogique (240) et de la tension du courant continu délivré par la seconde extrémité de sortie au circuit de commande analogique (240) est inférieure à un troisième seuil de tension, le circuit de commande analogique (240) est configuré pour augmenter le rapport cyclique du transistor de commutation dans l'alimentation auxiliaire (220), pour augmenter la tension du courant continu délivré par la première extrémité de sortie et la tension du courant continu délivré par la seconde extrémité de sortie.

5. Convertisseur de puissance selon la revendication 4, dans lequel le circuit de régulation de tension (230) comprend un transistor de commutation, une première résistance, une deuxième résistance, une troisième résistance, et un condensateur, un collecteur du transistor de commutation dans le circuit de régulation de tension (230) est connecté à la première résistance, un émetteur du transistor de commutation dans le circuit de régulation de tension (230) est connecté à la deuxième résistance, un point de connexion en série entre la première résistance et la deuxième résistance est connecté à la troisième résistance, le condensateur est connecté en parallèle à deux extrémités de la deuxième résistance, et le point de connexion en série entre la première résistance et la deuxième résistance est utilisé pour se connecter au circuit de commande analogique (240) ; et
une valeur de résistance de la troisième résistance est supérieure à une valeur de résistance de la première résistance, la valeur de résistance de la troisième résistance est inférieure à une valeur de résistance de la deuxième résistance, et la tension du courant continu délivré par le circuit de régulation de tension (230) au circuit de commande analogique (240) est corrélée négativement avec un rapport cyclique du transistor de commutation dans le circuit de régulation de tension (230).

6. Convertisseur de puissance selon la revendication 5, dans lequel le circuit de régulation de tension (230) comprend en outre un amplificateur opérationnel et une quatrième résistance, une extrémité d'entrée non inverseuse de l'amplificateur opérationnel est connectée au point de connexion en série entre la première résistance et la deuxième résistance, une extrémité d'entrée inverseuse de l'amplificateur opérationnel est connectée à une extrémité de sortie de l'amplificateur opérationnel, l'extrémité de sortie de l'amplificateur opérationnel est connectée à une extrémité de la quatrième résistance, et l'autre extrémité de la quatrième résistance est configurée pour se connecter au circuit de commande analogique (240).

7. Procédé permettant d'ajuster une tension de pilotage d'un convertisseur de puissance selon la revendication 1, dans lequel le procédé comprend :
lorsqu'une tension sur un côté courant continu d'un circuit onduleur (210) du convertisseur de puissance est supérieure ou égale à un premier seuil de tension ou qu'une tension sur un côté courant alternatif du circuit onduleur (210) est supérieure ou égale à un deuxième seuil de tension, l'augmentation (710) d'une tension d'un courant continu délivré par un circuit de régulation de tension (230) du convertisseur de puissance, dans lequel le circuit de régulation de tension (230) est connecté à un circuit de commande analogique (240) du convertisseur de puissance ; et
lorsqu'une somme de la tension du courant continu délivré par le circuit de régulation de tension (230) au circuit de commande analogique (240) et d'une tension d'un courant continu délivré par une seconde extrémité de sortie d'une alimentation auxiliaire (220) du convertisseur de puissance au circuit de commande analogique (240) est supérieure à un troisième seuil de tension, la réduction (720) d'un rapport cyclique d'un transistor de commutation dans l'alimentation auxiliaire (220), pour réduire une tension d'un courant continu délivré par une première extrémité de sortie de l'alimentation auxiliaire (220) et la tension du courant continu délivré par la seconde extrémité de sortie, dans lequel le courant continu délivré par la première extrémité de sortie est utilisé pour piloter un transistor de commutation dans le circuit onduleur (210), et la tension du courant continu délivré par la première extrémité de sortie et la tension du courant continu délivré par la seconde extrémité de sortie sont corrélées positivement avec le rapport cyclique du transistor de commutation dans l'alimentation auxiliaire (220).

8. Procédé permettant d'ajuster une tension de pilotage d'un convertisseur de puissance selon la revendication 4, dans lequel le procédé comprend :
lorsqu'une tension sur un côté courant continu d'un circuit onduleur (210) du convertisseur de puissance est inférieure ou égale à un quatrième seuil de tension ou qu'une tension sur un côté courant alternatif du circuit onduleur (210) est inférieure ou égale à un cinquième seuil de tension, la réduction (810) d'une tension d'un courant continu délivré par un circuit de régulation de tension (230) du convertisseur de puissance, dans lequel le circuit de régulation de tension (230) est connecté à un circuit de commande analogique (240) du convertisseur de puissance ; et
lorsqu'une somme de la tension du courant continu délivré par le circuit de régulation de tension (230) au circuit de commande analogique (240) et d'une tension d'un courant continu délivré par une seconde extrémité de sortie d'une alimentation auxiliaire (220) du convertisseur de puissance au circuit de commande analogique (240) est inférieure à un troisième seuil de tension, l'augmentation (820) d'un rapport cyclique d'un transistor de commutation dans l'alimentation auxiliaire (220), pour augmenter une tension d'un courant continu délivré par une première extrémité de sortie de l'alimentation auxiliaire (220) et la tension du courant continu délivré par la seconde extrémité de sortie, dans lequel le courant continu délivré par la première extrémité de sortie est utilisé pour piloter un transistor de commutation dans le circuit onduleur (210), et la tension du courant continu délivré par la première extrémité de sortie et la tension du courant continu délivré par la seconde extrémité de sortie sont corrélées positivement avec le rapport cyclique du transistor de commutation dans l'alimentation auxiliaire (220).
